# EUROPEAN PATENT APPLICATION

(11) **EP 4 290 165 A1**
(43) Date of publication of application: **13.12.2023**
(21) Application number: 21924845.7
(22) Date of filing: 15.12.2021
(51) Int. Cl.: F28D 3/02, F28B 1/02, F28D 5/02, F28F 9/26, F28F 25/06

(54) **EVAPORATOR UNIT FOR ABSORPTION REFRIGERATOR, HEAT EXCHANGE UNIT, AND ABSORPTION REFRIGERATOR**

(30) Priority: 08.02.2021 JP 2021018493
(71) Applicant: Panasonic Intellectual Property Management Co., Ltd., Kadoma-shi, Osaka 571-0057 (JP)
(72) Inventor: SUN, Hongzhi, Osaka 571-0057 (JP); KAWANO, Bunki, Osaka 571-0057 (JP); SHIMODAHIRA, Nobukazu, Osaka 571-0057 (JP); MATSUI, Masaru, Osaka 571-0057 (JP)
(74) Representative: Eisenführ Speiser
(86) International application number: PCT/JP2021/046233
(87) International publication number: WO 2022/168460

(57) **Abstract**

An evaporator unit 1a includes a first evaporator 11a, a second evaporator 11b, a circulation path 16, and a return tube 18. The first evaporator 11a includes a first heat transfer tube group 12a, a first spray nozzle 13a, and a first reservoir 15a. The second evaporator 11b includes a second heat transfer tube group 12b, a second spray nozzle 13b, and a second reservoir 15b. The circulation path 16 guides a liquid-phase refrigerant stored in the second reservoir 15b to the first spray nozzle 13a and the second spray nozzle 13b. The return tube 18 guides a liquid-phase refrigerant stored in the first reservoir 15a to the outside of the first evaporator 11a, and allows the liquid-phase refrigerant to be mixed with the liquid-phase refrigerant stored in the second reservoir 15b.

## Description

### TECHNICAL FIELD

The present disclosure relates to an evaporator unit for an absorption refrigerator, a heat exchange unit, and an absorption refrigerator.

### BACKGROUND ART

Absorption refrigerators are conventionally known. For example, Patent Literature 1 describes an absorption heat pump device. This absorption heat pump device includes an evaporator, an absorber, a condenser, a high-temperature regenerator, and a low-temperature regenerator. The evaporator and the absorber are configured to have a two-stage evaporation absorption structure in which each of the evaporator and the absorber is arranged in two stages. The evaporator includes a refrigerant diffuser and a cool water pipe. The refrigerant diffuser diffuses a refrigerant liquid into the evaporator. A refrigerant liquid reservoir is disposed beneath the evaporator. The cool water pipe is disposed inside the evaporator, and cool water flows in the cool water pipe. The refrigerant liquid diffused from the refrigerant diffuser takes heat from the cool water flowing inside the evaporator and evaporates, while flowing downward in the evaporator. The refrigerant liquid that has not evaporated is stored in a lower portion of the evaporator.

### CITATION LIST

### Patent Literature

Patent Literature 1: JP 2012-202589 A

### SUMMARY OF INVENTION

### Technical Problem

The present disclosure provides an evaporator unit, for an absorption refrigerator, which allows liquid-phase refrigerants stored in a plurality of evaporators to be sprayed in the respective evaporators, and which is suitable for keeping a difference in pressure between the evaporators.

### Solution to Problem

An evaporator unit for an absorption refrigerator according to the present disclosure includes:
a first evaporator being provided with a first heat transfer tube group including heat transfer tubes arranged in rows and columns, a first spray nozzle configured to spray a liquid-phase refrigerant toward the first heat transfer tube group, and a first reservoir configured to store therein the liquid-phase refrigerant;
a second evaporator being provided with a second heat transfer tube group including heat transfer tubes arranged in rows and columns, a second spray nozzle configured to spray a liquid-phase refrigerant toward the second heat transfer tube group, and a second reservoir configured to store therein the liquid-phase refrigerant;
a circulation path configured to guide the liquid-phase refrigerant stored in the second reservoir to the first spray nozzle and the second spray nozzle; and
a return tube configured to guide the liquid-phase refrigerant stored in the first reservoir to an outside of the first evaporator, and allow the liquid-phase refrigerant to be mixed with the liquid-phase refrigerant stored in the second reservoir.

### Advantageous Effects of Invention

According to the evaporator unit for an absorption refrigerator of the present disclosure, the liquid-phase refrigerant stored in the first reservoir is guided to the outside of the first evaporator by the return tube, and is mixed with the liquid-phase refrigerant stored in the second reservoir. Thus, the amount of a vapor-phase refrigerant condensed in the second evaporator tends to decrease, whereby a difference between the pressure in the second evaporator and the pressure in the first evaporator is easily kept at a desired value.

### BRIEF DESCRIPTION OF THE DRAWINGS

FIG. 1 shows a heat exchange unit according to Embodiment 1.
FIG. 2 shows a heat exchange unit according to Embodiment 2.
FIG. 3 shows an absorption refrigerator according to Embodiment 3.

### DESCRIPTION OF EMBODIMENTS

### (Findings on which the present disclosure is based)

At the time when the present inventors conceived of the present disclosure, it was known that an evaporator for an absorption refrigerator is configured in two stages. The absorption refrigerator having such a configuration is considered to have high energy-saving performance, but generally causes an increase in the size of the absorption refrigerator. Under such a situation, the present inventors focused their attention on the fact that a spraying method, adopted as a method for supplying a liquid-phase refrigerant to an evaporator, allows the surfaces of heat transfer tubes to be easily wetted by the liquid-phase refrigerant, thereby reducing the size of the evaporator. Taking this fact as a hint, the present inventors came up with an idea of equipping a spray type evaporator unit, in which liquid-phase refrigerants stored in a plurality of evaporators are sprayed in the respective evaporators, in an absorption refrigerator to achieve size reduction of the absorption refrigerator. Then, the present inventors found that, in achieving this idea, it is difficult to keep a difference in pressure between the evaporators at a desired value, depending on how to treat a low-temperature liquid-phase refrigerant stored in a specific evaporator. For example, in the case where the low-temperature liquid-phase refrigerant stored in the specific evaporator is supplied to another evaporator to be kept at a high pressure, since the spraying method is adopted as the method for supplying the liquid-phase refrigerant to the evaporator, the low-temperature liquid-phase refrigerant cannot be diffused in the evaporator to be kept at a high pressure. Therefore, the low-temperature liquid-phase refrigerant is less prone to absorb heat and evaporate at the surfaces of the heat transfer tubes. The low-temperature liquid-phase refrigerant directly comes into contact with a vapor-phase refrigerant in the evaporator to be kept at a high pressure, and condenses the vapor-phase refrigerant. As a result, the pressure in the other evaporator to be kept at a high pressure approaches a saturation pressure at the temperature of the low-temperature liquid-phase refrigerant stored in the specific evaporator, which makes it difficult to keep a difference in pressure between the evaporators at a desired value. In order to solve the above problem, the present inventors arrived at configuring the means of the present disclosure.

Thus, the present disclosure provides an evaporator unit, for an absorption refrigerator, which allows liquid-phase refrigerants stored in a plurality of evaporators to be sprayed in the respective evaporators, and which is suitable for keeping a difference in pressure between the evaporators.

Embodiments will be described in detail below with reference to the drawings. However, an unnecessarily detailed description may be omitted. For example, a detailed description of the matters already well known and a repeated description of substantially the same configuration may be omitted. Note that the accompanying drawings and the following description are provided for those skilled in the art to fully understand the present disclosure, and thus are not intended to limit the subject matters recited in the claims to these.

### (Embodiment 1)

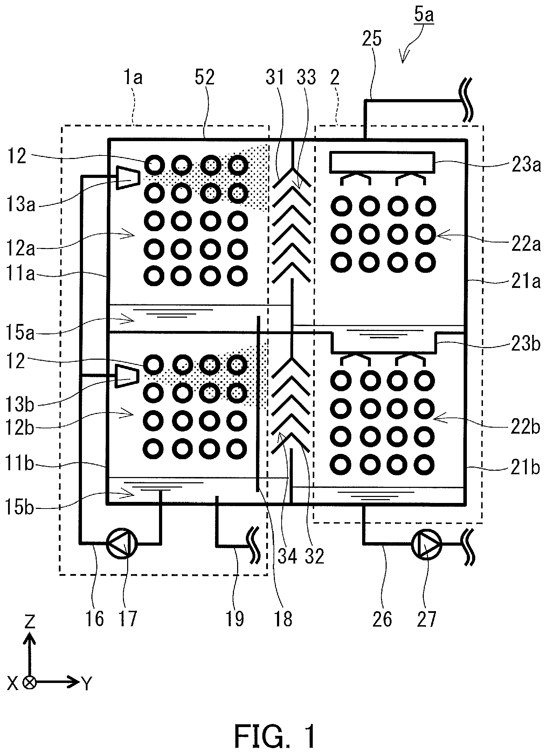

Embodiment 1 will be described with reference to FIG. 1. In the accompanying drawings, the Z-axis negative direction represents the gravity direction. The X-axis, the Y-axis, and the Z-axis are orthogonal to each other.

### [1-1. Configuration]

As shown in FIG. 1, an evaporator unit 1a for an absorption refrigerator includes a first evaporator 11a, a second evaporator 11b, a circulation path 16, and a return tube 18. The first evaporator 11a includes a first heat transfer tube group 12a, a first spray nozzle 13a, and a first reservoir 15a. The first heat transfer tube group 12a includes heat transfer tubes 12 arranged in rows and columns. The first spray nozzle 13a sprays a liquid-phase refrigerant toward the first heat transfer tube group 12a. The liquid-phase refrigerant is stored in the first reservoir 15a. The second evaporator 11b includes a second heat transfer tube group 12b, a second spray nozzle 13b, and a second reservoir 15b. The second heat transfer tube group 12b includes heat transfer tubes 12 arranged in rows and columns. The second spray nozzle 13b sprays a liquid-phase refrigerant toward the second heat transfer tube group 12b. The liquid-phase refrigerant is stored in the second reservoir 15b. The circulation path 16 guides the liquid-phase refrigerant stored in the second reservoir 15b to the first spray nozzle 13a and the second spray nozzle 13b. The return tube 18 guides the liquid-phase refrigerant stored in the first reservoir 15a to the outside of the first evaporator 11a, and allows the liquid-phase refrigerant to be mixed with the liquid-phase refrigerant stored in the second reservoir 15b.

For example, when the evaporator unit 1a is operated in a steady state, the temperature of the liquid-phase refrigerant stored in the second reservoir 15b is higher than the temperature of the liquid-phase refrigerant stored in the first reservoir 15a.

Arrangement of the first evaporator 11a and the second evaporator 11b in the evaporator unit 1a is not limited to a particular arrangement. As shown in FIG. 1, in the evaporator unit 1a, the first evaporator 11a is arranged above the second evaporator 11b, for example. In other words, the first evaporator 11a is arranged in an upper stage of the evaporator unit 1a while the second evaporator 11b is arranged in a lower stage of the evaporator unit 1a, with respect to the gravity direction.

As shown in FIG. 1, for example, a heat exchange unit 5a including an evaporator unit 1a and an absorber unit 2 can be provided. The evaporator unit 1a generates a vapor-phase refrigerant. The absorber unit 2 absorbs the vapor-phase refrigerant generated in the evaporator unit 1a.

The absorber unit 2 includes a first absorber 21a and a second absorber 21b. The first absorber 21a is arranged above the second absorber 21b, for example. In other words, the first absorber 21a is arranged in an upper stage of the absorber unit 2 while the second absorber 21b is arranged in a lower stage of the absorber unit 2, with respect to the gravity direction.

The heat exchange unit 5a is charged with a refrigerant and an absorbent liquid. The refrigerant is, for example, a chlorofluorocarbon refrigerant, such as hydrofluorocarbon (HFC) or a natural refrigerant, such as water or ammonia. The absorbent liquid is, for example, an aqueous solution of lithium bromide, or an ionic fluid.

As shown in FIG. 1, the heat exchange unit 5a includes, for example, a shell 52. The shell 52 has thermal insulation properties and pressure resistance. The liquid-phase refrigerant and the absorbent liquid are stored inside the shell 52. In addition, the vapor-phase refrigerant inside the shell 52 is isolated from the outside air, such as air at atmospheric pressure.

Each of the first evaporator 11a and the second evaporator 11b is, for example, a shell-and-tube heat exchanger. For example, in the case where a refrigerant, such as water, whose saturated vapor pressure at ordinary temperature (20°C±15°C) is a negative pressure is used, the water-level head of the liquid-phase refrigerant tends to greatly influence the evaporation pressure in a flooded shell-and-tube heat exchanger. Therefore, in the case where a refrigerant, such as water, is used, it is advantageous that each of the first evaporator 11a and the second evaporator 11b is a spray type shell-and-tube heat exchanger.

In the first heat transfer tube group 12a and the second heat transfer tube group 12b, the heat transfer tubes 12 are arranged, for example, in parallel to each other to define a plurality of rows in the gravity direction. In the first heat transfer tube group 12a and the second heat transfer tube group 12b, the heat transfer tubes 12 are arranged, for example, to form a square grid or a rectangular grid in a plane perpendicular to the longitudinal direction of the heat transfer tubes 12 (ZY plane). Each heat transfer tube 12 is made of, for example, copper or stainless steel. Each heat transfer tube 12 may have a groove in its inner surface or outer surface.

The first spray nozzle 13a and the second spray nozzle 13b can supply atomized liquid-phase refrigerant toward the first heat transfer tube group 12a and the second heat transfer tube group 12b, respectively. The spray pattern of the liquid-phase refrigerant from each of the first spray nozzle 13a and the second spray nozzle 13b can be a conical pattern or a sheet pattern.

As shown in FIG. 1, the circulation path 16 is connected to, for example, the second reservoir 15b. The circulation path 16 is formed of, for example, a tube having thermal insulation properties and pressure resistance.

As shown in FIG. 1, the evaporator unit 1a further includes, for example, a pump 17. The pump 17 pumps the liquid-phase refrigerant stored in the second reservoir 15b to allow the refrigerant to pass through the circulation path 16. The pump 17 is, for example, a dynamic canned pump. As shown in FIG. 1, the pump 17 is disposed in, for example, the circulation path 16. Owing to the operation of the pump 17, the liquid-phase refrigerant stored in the second reservoir 15b passes through the circulation path 16 and is guided to the first spray nozzle 13a and the second spray nozzle 13b. In the evaporator unit 1a, the liquid-phase refrigerant stored in the second reservoir 15b is pumped toward the first spray nozzle 13a and the second spray nozzle 13b by only the single pump 17, for example. This allows size reduction of the evaporator unit 1a.

As shown in FIG. 1, one end of the return tube 18 is immersed in the liquid-phase refrigerant stored in the first reservoir 15a, and the other end of the return tube 18 is immersed in the liquid-phase refrigerant stored in the second reservoir 15b. A portion of the return tube 18 is present inside the second evaporator 11b, for example. The return tube 18, except for the other end thereof, may be present outside the second evaporator 11b. The return tube 18, for example, allows the liquid-phase refrigerant stored in the first reservoir 15a to be mixed with the liquid-phase refrigerant stored in the second reservoir 15b without being in contact with the vapor-phase refrigerant inside the second evaporator 11b.

As shown in FIG. 1, the evaporator unit 1a further includes, for example, a first supply path 19. The first supply path 19 is a path for supplying the liquid-phase refrigerant into the evaporator unit 1a. The first supply path 19 is connected to, for example, the second reservoir 15b. The first supply path 19 is formed of, for example, a tube having thermal insulation properties and pressure resistance.

Each of the first absorber 21a and the second absorber 21b is, for example, a shell-and-tube heat exchanger. As an absorbent liquid supplying method in the absorber unit 2, a diffusing method can be chosen. As shown in FIG. 1, the first absorber 21a includes, for example, a third heat transfer tube group 22a and a first diffuser 23a. The second absorber 21b includes, for example, a fourth heat transfer tube group 22b and a second diffuser 23b.

Each of the third heat transfer tube group 22a and the fourth heat transfer tube group 22b includes heat transfer tubes arranged in rows and columns. In each of the third heat transfer tube group 22a and the fourth heat transfer tube group 22b, the heat transfer tubes are arranged, for example, in parallel to each other to define a plurality of rows in the gravity direction. In each of the third heat transfer tube group 22a and the fourth heat transfer tube group 22b, the heat transfer tubes are arranged, for example, to form a square grid or a rectangular grid in a plane perpendicular to the longitudinal direction of the heat transfer tubes (ZY plane). Each heat transfer tube is made of, for example, copper or stainless steel. Each heat transfer tube may have a groove in its inner surface or outer surface.

The first diffuser 23a diffuses the absorbent liquid toward the third heat transfer tube group 22a. The absorbent liquid is, for example, dripped toward the third heat transfer tube group 22a by the first diffuser 23a. The second diffuser 23b diffuses the absorbent liquid toward the fourth heat transfer tube group 22b. The absorbent liquid is, for example, dripped toward the fourth heat transfer tube group 22b by the second diffuser 23b. Each of the first diffuser 23a and the second diffuser 23b is provided with, for example, a tray for storing therein the absorbent liquid. Each of the first diffuser 23a and the second diffuser 23b can be fabricated by, for example, welding components obtained by pressing stainless steel plates.

As shown in FIG. 1, the heat exchange unit 5a further includes, for example, a second supply path 25. The second supply path 25 is a path for supplying the absorbent liquid to the absorber unit 2. The second supply path 25 is formed of, for example, a tube having thermal insulation properties and pressure resistance.

The heat exchange unit 5a further includes, for example, a discharge path 26. The discharge path 26 is a path for discharging the absorbent liquid from the absorber unit 2. The discharge path 26 is formed of, for example, a tube having thermal insulation properties and pressure resistance.

The heat exchange unit 5a further includes, for example, a pump 27. The pump 27 is disposed in the discharge path 26. The pump 27 is, for example, a dynamic canned pump. Owing to the operation of the pump 27, the liquid-phase refrigerant stored in the absorber unit 2 is pumped to pass through the discharge path 26.

As shown in FIG. 1, the heat exchange unit 5a further includes, for example, a first eliminator 31, a second eliminator 32, a first vapor flow path 33, and a second vapor flow path 34. The first vapor flow path 33 is a path for guiding the vapor-phase refrigerant generated in the first evaporator 11a to the first absorber 21a. The first vapor flow path 33 allows the inside of the first evaporator 11a to communicate with the inside of the first absorber 21a. The second vapor flow path 34 is a path for guiding the vapor-phase refrigerant generated in the second evaporator 11b to the second absorber 21b. The second vapor flow path 34 allows the inside of the second evaporator 11b to communicate with the inside of the second absorber 21b. The first vapor flow path 33 and the second vapor flow path 34 are made of a metal material, such as steel, to have thermal insulation properties and pressure resistance.

Each of the first eliminator 31 and the second eliminator 32 is a vapor liquid separator, and prevents droplets of the liquid-phase refrigerant in the evaporator unit 1a from being dragged by the flow of the vapor-phase refrigerant and carried to the absorber unit 2. The first eliminator 31 is disposed in the first vapor flow path 33. The second eliminator 32 is disposed in the second vapor flow path 34. Each of the first eliminator 31 and the second eliminator 32 can be fabricated by, for example, welding components obtained by pressing stainless steel plates.

### [1-2. Operations]

As for the heat exchange unit 5a configured as above, its operations and functions will be described below. When the heat exchange unit 5a is not operated for a specific time period, such as at night, the internal temperature of the heat exchange unit 5a is almost equal to room temperature and uniform, and the internal pressure of the heat exchange unit 5a is uniform as well. For example, at a room temperature of 25°C, the internal temperature of the heat exchange unit 5a is also 25°C and uniform. In use of the heat exchange unit 5a, a heat medium, such as water, that has absorbed heat from the outside of the heat exchange unit 5a flows through the heat transfer tubes 12 of the first heat transfer tube group 12a and the second heat transfer tube group 12b. This heat medium flows into the second heat transfer tube group 12b at, for example, 12°C, passes through the second heat transfer tube group 12b, and flows into the first heat transfer tube group 12a. Meanwhile, a heat medium, such as water, that has dissipated heat to the outside of the heat exchange unit 5a flows through the heat transfer tubes of the third heat transfer tube group 22a and the fourth heat transfer tube group 22b in the absorber unit 2. This heat medium flows into the fourth heat transfer tube group 22b at, for example, 32°C.

When the use of the heat exchange unit 5a is started, the liquid-phase refrigerant stored in the second reservoir 15b is firstly sucked by the pump 17, and the liquid-phase refrigerant is supplied to the first spray nozzle 13a and the second spray nozzle 13b through the circulation path 16. Then, the liquid-phase refrigerant is sprayed from the first spray nozzle 13a and the second spray nozzle 13b toward the first heat transfer tube group 12a and the second heat transfer tube group 12b, respectively, so that the liquid-phase refrigerant in a mist form is supplied. The liquid-phase refrigerant sprayed toward the second heat transfer tube group 12b flows down while forming liquid films on the outer surfaces of the heat transfer tubes 12. During a time period when the liquid-phase refrigerant flows down the outer surfaces of the heat transfer tubes 12, the liquid-phase refrigerant takes heat from the cool water flowing in the heat transfer tubes 12 and evaporates, thereby generating a vapor-phase refrigerant. The liquid-phase refrigerant that has not evaporated is stored in the second reservoir 15b. The liquid-phase refrigerant sprayed toward the first heat transfer tube group 12a flows down while forming liquid films on the outer surfaces of the heat transfer tubes 12. During a time period when the liquid-phase refrigerant flows down the outer surfaces of the heat transfer tubes 12, the liquid-phase refrigerant takes heat from the cool water flowing in the heat transfer tubes 12 and evaporates, thereby generating a vapor-phase refrigerant. The liquid-phase refrigerant that has not evaporated is stored in the first reservoir 15a. The liquid-phase refrigerant stored in the first reservoir 15a passes through the return tube 18 and is guided to the second reservoir 15b.

Next, the absorbent liquid is supplied to the absorber unit 2 through the second supply path 25. The absorbent liquid to be supplied to the absorber unit 2 has, for example, a temperature of about 50°C and a solute concentration of about 63 mass%. The absorbent liquid supplied to the absorber unit 2 is stored in the first diffuser 23a, and is dripped toward the third heat transfer tube group 22a. The dripped absorbent liquid absorbs the vapor-phase refrigerant generated in the first evaporator 11a while flowing down the outer surfaces of the heat transfer tubes of the third heat transfer tube group 22a. Thus, the absorbent liquid with the reduced solute concentration is stored in the second diffuser 23b. The absorbent liquid stored in the second diffuser 23b has, for example, a temperature of about 44°C and a solute concentration of about 59 mass%. The absorbent liquid stored in the second diffuser 23b is dripped toward the fourth heat transfer tube group 22b. The dripped absorbent liquid absorbs the vapor-phase refrigerant generated in the second evaporator 11b while flowing down the outer surfaces of the heat transfer tubes of the fourth heat transfer tube group 22b. Thus, the absorbent liquid with the further reduced solute concentration is stored in the lower portion of the second absorber 21b. The absorbent liquid stored in the lower portion of the second absorber 21b is pumped by the pump 27 to be discharged to the outside of the absorber unit 2 through the discharge path 26. The absorbent liquid to be discharged has, for example, a temperature of about 37°C and a solute concentration of about 55 mass%.

When the absorbent liquid flows down the outer surfaces of the heat transfer tubes of the third heat transfer tube group 22a or the fourth heat transfer tube group 22b, the vapor-phase refrigerant generated in the first evaporator 11a or the second evaporator 11b is absorbed by the absorbent liquid. Absorption of the vapor-phase refrigerant by the absorbent liquid increases the temperature of the absorbent liquid, but at the same time, the absorbent liquid is cooled by the heat medium flowing through the heat transfer tubes of the third heat transfer tube group 22a or the fourth heat transfer tube group 22b. Therefore, absorption of the vapor-phase refrigerant by the absorbent liquid in the supercooled state continuously occurs, so that the internal pressure of the heat exchange unit 5a decreases. Thus, the liquid-phase refrigerant, which flows down the outer surfaces of the heat transfer tubes 12 of the first heat transfer tube group 12a and the second heat transfer tube group 12b, evaporates. Evaporation of the liquid-phase refrigerant decreases the temperature of the liquid-phase refrigerant, but at the same time, the liquid-phase refrigerant is heated by the heat medium flowing through the heat transfer tubes 12 of the first heat transfer tube group 12a and the second heat transfer tube group 12b. Therefore, evaporation of the liquid-phase refrigerant continuously occurs, the internal pressure of the heat exchange unit 5a is kept within a predetermined range, and the internal state of the heat exchange unit 5a becomes a steady state. In the steady state, the temperature of the heat medium in the second heat transfer tube group 12b decreases from 12°C to 9.75°C. In addition, the temperature of the heat medium in the first heat transfer tube group 12a decreases from 9.75°C to 7°C. This results in a difference in internal pressure and a difference in temperature of the liquid-phase refrigerant, between the first evaporator 11a and the second evaporator 11b.

### [1-3. Effects, etc.]

As described above, in the present embodiment, the evaporator unit 1a for an absorption refrigerator includes the first evaporator 11a, the second evaporator 11b, the circulation path 16, and the return tube 18. The first evaporator 11a includes the first heat transfer tube group 12a, the first spray nozzle 13a, and the first reservoir 15a. The first heat transfer tube group 12a includes the heat transfer tubes 12 arranged in rows and columns. The first spray nozzle 13a sprays the liquid-phase refrigerant toward the first heat transfer tube group 12a. The liquid-phase refrigerant is stored in the first reservoir 15a. The second evaporator 11b includes the second heat transfer tube group 12b, the second spray nozzle 13b, and the second reservoir 15b. The second heat transfer tube group 12b includes the heat transfer tubes 12 arranged in rows and columns. The second spray nozzle 13b sprays the liquid-phase refrigerant toward the second heat transfer tube group 12b. The liquid-phase refrigerant is stored in the second reservoir 15b. The circulation path 16 guides the liquid-phase refrigerant stored in the second reservoir 15b to the first spray nozzle 13a and the second spray nozzle 13b. The return tube 18 guides the liquid-phase refrigerant stored in the first reservoir 15a to the outside of the first evaporator 11a, and allows the liquid-phase refrigerant to be mixed with the liquid-phase refrigerant stored in the second reservoir 15b.

Thus, the liquid-phase refrigerant stored in the first reservoir 15a is guided to the outside of the first evaporator 11a by the return tube 18, and is mixed with the liquid-phase refrigerant stored in the second reservoir 15b. The mixed liquid-phase refrigerant is supplied to the first spray nozzle 13a and the second spray nozzle 13b through the circulation path 16, and then is supplied to the first evaporator 11a and the second evaporator 11b, respectively. Since the liquid-phase refrigerant stored in the first reservoir 15a passes through the return tube 18 and is mixed with the liquid-phase refrigerant stored in the second reservoir 15b, the vapor-phase refrigerant in the second evaporator 11b is prevented from coming into contact with the low-temperature liquid-phase refrigerant stored in the first reservoir 15a, and from being condensed. As a result, the amount of the vapor-phase refrigerant condensed in the second evaporator 11b is small, so that a difference between the pressure in the second evaporator 11b and the pressure in the first evaporator 11a is easily kept at a desired value.

As in the present embodiment, the temperature of the liquid-phase refrigerant stored in the second reservoir 15b may be higher than the temperature of the liquid-phase refrigerant stored in the first reservoir 15a. Thus, the pressure in the second evaporator 11b tends to be increased so that the difference between the pressure in the second evaporator 11b and the pressure in the first evaporator 11a is kept at the desired value.

As in the present embodiment, the first evaporator 11a may be disposed above the second evaporator 11b. Thus, the potential energy of the liquid-phase refrigerant stored in the first reservoir 15a of the first evaporator 11a can be used for guiding the liquid-phase refrigerant to the outside of the first evaporator 11a.

As in the present embodiment, the return tube 18 may guide the liquid-phase refrigerant stored in the first reservoir 15a to the outside of the first evaporator 11a, and allow the liquid-phase refrigerant to be mixed with the liquid-phase refrigerant stored in the second reservoir 15b. Thus, the temperature of the liquid-phase refrigerant stored in the second reservoir 15b is kept at a desired temperature, and the difference between the pressure in the second evaporator 11b and the pressure in the first evaporator 11a is easily kept at a desired value.

For example, the temperature of the low-temperature liquid-phase refrigerant stored in the first reservoir 15a is 6.1°C. On the other hand, the temperature of the high-temperature liquid-phase refrigerant, which has flowed down the outer surfaces of the heat transfer tubes 12 in the second heat transfer tube group 12b, is 7.6°C. These liquid-phase refrigerants are mixed in the second reservoir 15b, and the liquid-phase refrigerant having a medium temperature of 6.9°C is stored in the second reservoir 15b. A saturated vapor pressure of the liquid-phase refrigerant at the high temperature of 7.6°C is, for example, 1030 Pa. The vapor-phase refrigerant in the second evaporator 11b is prevented from coming into contact with the liquid-phase refrigerant at the low temperature of 6.1 °C and from being condensed, while the vapor-phase refrigerant in the second evaporator 11b comes into contact with the liquid-phase refrigerant at the medium temperature of 6.9°C, and is condensed. Thus, the pressure in the second evaporator 11b is kept at, for example, 995 Pa. The pressure in the first evaporator 11a is kept at, for example, 940 Pa. Therefore, the difference between the pressure in the second evaporator 11b and the pressure in the first evaporator 11a is kept at, for example, 55 Pa.

As in the present embodiment, the heat exchange unit 5a including the evaporator unit 1a that generates a vapor-phase refrigerant, and the absorber unit 2 that absorbs the vapor-phase refrigerant generated in the evaporator unit 1a, may be provided. This allows the difference between the pressure in the second evaporator 11b and the pressure in the first evaporator 11a to be easily kept at a desired value, and allows a desired amount of vapor-phase refrigerant to be easily supplied to the absorber unit 2.

### (Embodiment 2)

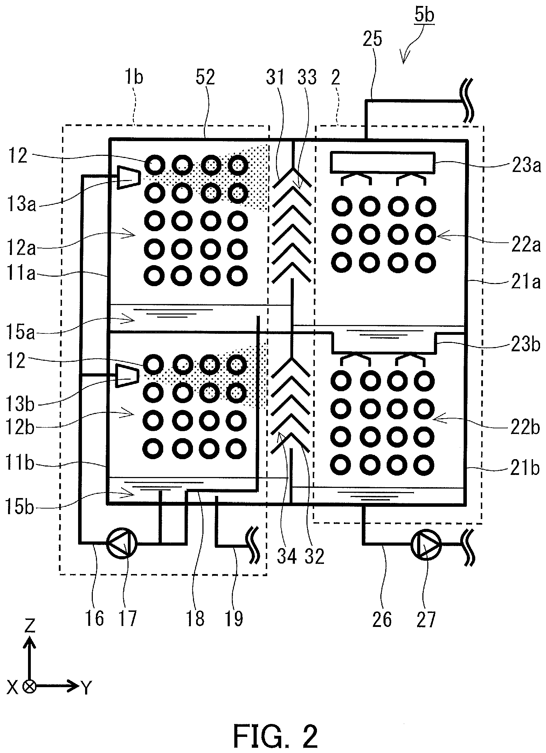

Embodiment 2 will be described below with reference to FIG. 2. A heat exchange unit 5b according to Embodiment 2 has a similar configuration to that of the heat exchange unit 5a according to Embodiment 1 except portions as otherwise particularly described. An evaporator unit 1b according to Embodiment 2 shown in FIG. 2 has a similar configuration to that of the evaporator unit 1a according to Embodiment 1 except portions as otherwise particularly described. The constituent elements of the evaporator unit 1b that are identical or corresponding to those of the evaporator unit 1a are denoted by the same reference numerals, and detailed descriptions thereof will be omitted. The description of Embodiment 1 also applies to Embodiment 2 unless the descriptions are technically contradictory.

### [2-1. Configuration]

As shown in FIG. 2, in the evaporator unit 1b, the return tube 18 guides the liquid-phase refrigerant stored in the first reservoir 15a to the outside of the first evaporator 11a, and allows the liquid-phase refrigerant to be mixed with the liquid-phase refrigerant stored in the second reservoir 15b, in the circulation path 16.

As shown in FIG. 2, one end of the return tube 18 is immersed in the liquid-phase refrigerant stored in the first reservoir 15a. The flow path formed by the return tube 18 is connected to the circulation path 16. The flow path formed by the return tube 18 is connected to, for example, an upstream portion of the pump 17 in the flow of the liquid-phase refrigerant in the circulation path 16. The tubes forming the return tube 18 and the circulation path 16 may have a double tube structure in the vicinity of a connecting portion of the circulation path 16 and the flow path formed by the return tube 18. A portion of the return tube 18 may be disposed inside the second evaporator 11b, or the entire return tube 18 may be disposed outside the second evaporator 11b.

### [2-2. Operation]

As for the heat exchange unit 5b including the evaporator unit 1b configured as above, its operations and functions will be described below.

When the heat exchange unit 5b is in a steady state during an operation corresponding to a load of 50%, the temperature of the heat medium decreases from 9.5°C to 8.25°C in the second heat transfer tube group 12b. In addition, the temperature of the heat medium decreases from 8.25°C to 7°C in the first heat transfer tube group 12a. As a result, a difference in internal pressure and a difference in temperature of the liquid-phase refrigerant occur between the first evaporator 11a and the second evaporator 11b.

### [2-3. Effects, etc.]

As described above, in the present embodiment, the return tube 18 guides the liquid-phase refrigerant stored in the first reservoir 15a to the outside of the first evaporator 11a, and allows the liquid-phase refrigerant to be mixed with the liquid-phase refrigerant stored in the second reservoir 15b, in the circulation path 16.

This more reliably prevents the vapor-phase refrigerant in the second evaporator 11b from coming into contact with the low-temperature liquid-phase refrigerant stored in the first reservoir 15a, and from being condensed. As a result, the amount of the vapor-phase refrigerant condensed in the second evaporator 11b is small, so that the difference between the pressure in the second evaporator 11b and the pressure in the first evaporator 11a is easily kept at a desired value.

For example, when the heat exchange unit 5b is in the steady state during the operation corresponding to the load of 50%, the liquid-phase refrigerant at the medium temperature of 6.9°C, which has flowed down the outer surfaces of the heat transfer tubes 12 of the second heat transfer tube group 12b, is stored in the second reservoir 15b. Therefore, the temperature of the liquid-phase refrigerant stored in the second reservoir 15b becomes 6.9°C which is equal to the temperature of the medium-temperature liquid-phase refrigerant that has flowed down the outer surfaces of the heat transfer tubes 12 of the second heat transfer tube group 12b. As described above, in the evaporator unit 1b, the vapor-phase refrigerant in the second evaporator 11b is more reliably prevented from coming into contact with the low-temperature liquid-phase refrigerant stored in the first reservoir 15a and from being condensed. The pressure in the second evaporator 11b is kept at, for example, 995 Pa. The pressure in the first evaporator 11a is kept at, for example, 940 Pa. Therefore, the difference between the pressure in the second evaporator 11b and the pressure in the first evaporator 11a is kept at, for example, 55 Pa.

### (Embodiment 3)

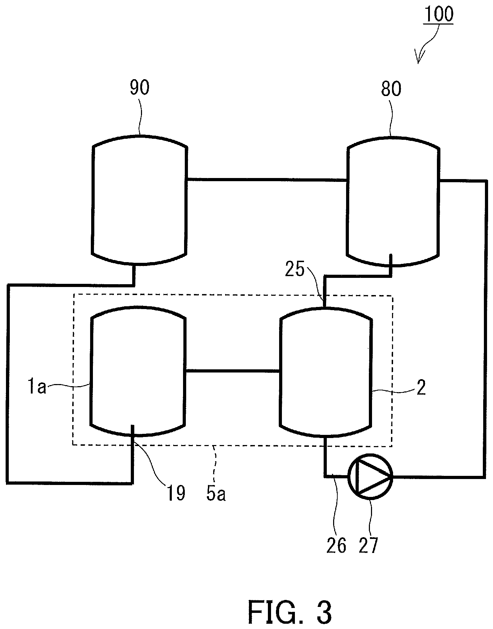

Embodiment 3 will be described below with reference to FIG. 3.

### [3-1. Configuration]

As shown in FIG. 3, an absorption refrigerator 100 includes, for example, a heat exchange unit 5a. The absorption refrigerator 100 may include a heat exchange unit 5b instead of the heat exchange unit 5a. The absorption refrigerator 100 further includes, for example, a regenerator 80 and a condenser 90. The absorption refrigerator 100 is, for example, an absorption refrigerator of a single-effect cycle.

### [3-2. Operation]

As for the absorption refrigerator 100 configured as above, its operations and functions will be described below. The absorbent liquid stored in the absorber unit 2 is guided to the regenerator 80 through the discharge path 26. In the regenerator 80, the absorbent liquid is heated to increase the solute concentration. The absorbent liquid with the increased solute concentration is guided to the absorber unit 2 through the second supply path 25. Meanwhile, heating of the absorbent liquid in the regenerator 80 generates a vapor-phase refrigerant. This vapor-phase refrigerant is guided to the condenser 90, and is cooled to be condensed in the condenser 90, thereby generating a liquid-phase refrigerant. The liquid-phase refrigerant is, for example, depressurized and then is guided to the evaporator unit 1a through the first supply path 19.

### [3-3. Effects]

As described above, in the present embodiment, the absorption refrigerator 100 includes the heat exchange unit 5a. In the evaporator unit 1a in the heat exchange unit 5a, a difference between the pressure in the second evaporator 11b and the pressure in the first evaporator 11a is easily kept at a desired value. This allows the absorption refrigerator 100 to easily achieve high energy saving performance, and allows the absorption refrigerator 100 to have a high coefficient of performance (COP). In addition, since the liquid-phase refrigerant is sprayed in the first evaporator 11a and the second evaporator 11b, downsizing of the heat exchange unit can be achieved, and consequently, downsizing of the absorption refrigerator can be achieved.

### (Other embodiments)

As described above, Embodiments 1, 2, and 3 have been described as exemplary techniques disclosed in the present application. However, the technique according to the present disclosure is not limited to these, and is also applicable to embodiments with modifications, replacements, additions, omissions, and the like. Furthermore, it is also possible to combine the constituent elements described in Embodiments 1 and 2 above to achieve a new embodiment. Thus, other embodiments will be exemplified below.

In Embodiment 1, the other end of the return tube 18 is immersed in the liquid-phase refrigerant stored in the second reservoir 15b. In Embodiment 2, the flow path formed by the return tube 18 is connected to the circulation path 16. The return tube 18 only needs to be capable of guiding the liquid-phase refrigerant stored in the first reservoir 15a to the outside of the first evaporator 11a, and allowing the liquid-phase refrigerant to be mixed with the liquid-phase refrigerant stored in the second reservoir 15b. Therefore, the return tube 18 may be a hybrid of the configuration described in Embodiment 1 with the configuration described in Embodiment 2. In other words, the return tube 18 may allow the liquid-phase refrigerant stored in the first reservoir 15a to be mixed with the liquid-phase refrigerant stored in the second reservoir 15b, in both the second reservoir 15b and the circulation path 16. The evaporator unit 1a or 1b may include a switching mechanism capable of switching a position where the liquid-phase refrigerant stored in the first reservoir 15a is mixed with the liquid-phase refrigerant stored in the second reservoir 15b, between the second reservoir 15b and the circulation path 16.

In Embodiment 1, the first supply path 19 is connected to the second reservoir 15b. The first supply path 19 only needs to be capable of supplying the liquid-phase refrigerant into the evaporator unit 1a. Therefore, the first supply path 19 may be connected to the first reservoir 15a. However, if the evaporator unit 1a has the configuration in which the first supply path 19 is connected to the second reservoir 15b, it is possible to easily prevent flash evaporation of the liquid-phase refrigerant supplied into the evaporator unit 1a through the first supply path 19.

In Embodiment 3, the absorption refrigerator of a single-effect cycle has been described as one example of the absorption refrigerator 100. The absorption refrigerator 100 only needs to include a heat exchange unit having a return tube 18. Therefore, the absorption refrigerator 100 is not limited to the absorption refrigerator of a single-effect cycle. The absorption refrigerator 100 may be an absorption refrigerator of a double-effect cycle or a triple-effect cycle. If a gas burner is used as the heat source for the regenerator 80, the absorption refrigerator 100 can be a gas chiller.

Note that the above embodiments are for exemplification of the technique according to the present disclosure, and accordingly can be subjected to various modifications, replacements, additions, omissions, and the like within the scope of the claims or equivalents thereof.

### INDUSTRIAL APPLICABILITY

The present disclosure is applicable to absorption refrigerators that are adapted to central air conditioners for buildings, chillers for process cooling, and the like.

## Claims

1. An evaporator unit for an absorption refrigerator, comprising:
a first evaporator being provided with a first heat transfer tube group including heat transfer tubes arranged in rows and columns, a first spray nozzle configured to spray a liquid-phase refrigerant toward the first heat transfer tube group, and a first reservoir configured to store therein the liquid-phase refrigerant;
a second evaporator being provided with a second heat transfer tube group including heat transfer tubes arranged in rows and columns, a second spray nozzle configured to spray a liquid-phase refrigerant toward the second heat transfer tube group, and a second reservoir configured to store therein the liquid-phase refrigerant;
a circulation path configured to guide the liquid-phase refrigerant stored in the second reservoir to the first spray nozzle and the second spray nozzle; and
a return tube configured to guide the liquid-phase refrigerant stored in the first reservoir to an outside of the first evaporator, and allow the liquid-phase refrigerant to be mixed with the liquid-phase refrigerant stored in the second reservoir.

2. The evaporator unit for an absorption refrigerator according to claim 1, wherein
the liquid-phase refrigerant stored in the second reservoir has a temperature higher than that of the liquid-phase refrigerant stored in the first reservoir.

3. The evaporator unit for an absorption refrigerator according to claim 1 or 2, wherein
the first evaporator is disposed above the second evaporator.

4. The evaporator unit for an absorption refrigerator according to any one of claims 1 to 3, wherein
the return tube guides the liquid-phase refrigerant stored in the first reservoir to the outside, and in the second reservoir, allows the liquid-phase refrigerant to be mixed with the liquid-phase refrigerant stored in the second reservoir.

5. The evaporator unit for an absorption refrigerator according to any one of claims 1 to 3, wherein
the return tube guides the liquid-phase refrigerant stored in the first reservoir to the outside, and in the circulation path, allows the liquid-phase refrigerant to be mixed with the liquid-phase refrigerant stored in the second reservoir.

6. A heat exchange unit, comprising:
the evaporator unit for an absorption refrigerator according to any one of claims 1 to 5; and
an absorber unit configured to absorb a vapor-phase refrigerant generated in the evaporator unit for an absorption refrigerator.

7. An absorption refrigerator comprising the heat exchange unit according to claim 6.
